# FASCICULE DE BREVET EUROPEEN

(11) **EP 3 720 768 B1**
(45) Date de publication et mention de la délivrance du brevet: **09.02.2022**
(21) Numéro de dépôt: 18815150.0
(22) Date de dépôt: 03.12.2018
(51) Int. Cl.: B64D 1/12, B64D 1/22

(54) **DISPOSITIF POUR UNE COMMANDE MANUELLE D'URGENCE D'UN SYSTÈME DISTANT**
VORRICHTUNG FÜR DIE MANUELLE NOTSTEUERUNG EINES ENTFERNTEN SYSTEMS
DEVICE FOR THE EMERGENCY MANUAL CONTROL OF A REMOTE SYSTEM

(30) Priorité: 07.12.2017 FR 1761791
(43) Date de publication de la demande: 14.10.2020
(73) Titulaire: Lace, 36250 Saint-Maur (FR)
(72) Inventeur: LACHEVRE, Paul, 36800 Rivarennes (FR); MAINGUIN, Patrick, 36200 Argenton sur Creuse (FR)
(74) Mandataire: Ipside
(86) Numéro de dépôt international: PCT/EP2018/083352
(87) Numéro de publication internationale: WO 2019/110509

(56) Documents cités:
- FR-A1- 2 670 460
- US-A- 4 530 535
- US-A- 4 539 732
- US-A1- 2006 033 309
- US-A1- 2011 175 385

## Description

### DOMAINE TECHNIQUE

L'invention appartient au domaine des commandes de secours mécanique sur un aéronef.

Plus particulièrement, l'invention appartient au domaine du transport de charge externe par un aéronef.

Plus particulièrement, l'invention appartient au domaine du largage d'une charge externe portée par un système de levage aérien.

Plus particulièrement, l'invention concerne un dispositif à commande manuelle permettant de larguer une charge portée par un crochet-délesteur.

### ETAT DE L'ART

Certains aéronefs sont équipés de crochets-délesteurs permettant le transport de charge externe. De tels crochets sont associés à des systèmes permettant de larguer les charges dans des situations d'urgence.

Le brevet français FR 2 670 460 divulgue une installation de cordage sur hélicoptère permettant le largage des cordages. L'installation consiste en une poutre fixée à un plancher de l'hélicoptère. La poutre est susceptible de recevoir un ensemble de verrous aptes à retenir un cordage au moyen d'une gâche. Un levier est associé à chaque verrou afin de libérer le cordage par actionnement dudit levier, entraînant une rotation d'une gâche et libérant le cordage.

Un inconvénient de cette installation est qu'il n'y a qu'une action à effectuer pour libérer un cordage, ce qui n'est pas en accord avec les dernières réglementations. Une erreur de manipulation peut libérer le cordage et déclencher un incident.

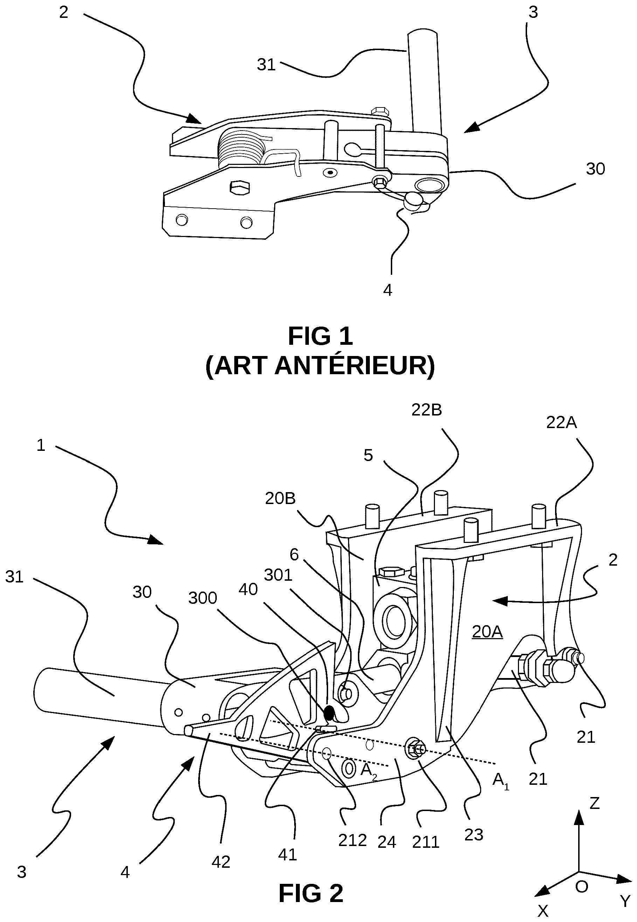

La figure 1 illustre un autre dispositif connu de largage à commande manuelle. Ce dispositif présente un corps 2, un actionneur manuel 3 comportant une poignée 31 et un levier 30 et un système de verrouillage 4 consistant en un fil de sûreté empêchant l'actionnement du levier. Le fil de sûreté du système de verrouillage 4 doit être brisé par un opérateur afin de pouvoir actionner la poignée 31 et ainsi larguer la charge.

Un tel dispositif nécessite deux actions pour libérer la charge : briser le fil de sûreté et actionner le levier. Cependant, ces deux actions ne sont pas bien distinctes, et il arrive dans certains cas que la charge puisse être libérée en une seule l'action lorsque le levier est actionné.

La demande de brevet américain publiée sous le numéro US 2011/0175385 A1 divulgue un crochet comportant un dispositif manuel d'ouverture.

### EXPOSE DE L'INVENTION

L'invention propose une solution aux inconvénients de l'art antérieur. Le dispositif selon l'invention propose un double verrouillage permettant de limiter les erreurs de manipulation relativement aux solutions de l'art antérieur, les deux actions de déverrouillage étant bien distinctes l'une de l'autre. La solution proposée est ainsi conforme aux nouvelles exigences des règlementations aéronautiques qui exigent d'avoir deux actions différentes à réaliser par un opérateur pour permettre le largage d'une charge.

Par ailleurs, la solution proposée permet le largage d'une charge à l'aide d'un seul doigt, de la main gauche ou de la main droite indifféremment.

L'invention concerne un dispositif selon la revendication 1.

Dans une forme de réalisation, l'actionneur manuel comporte un levier et une poignée solidaires entre eux, la gâche étant disposée sur le levier à proximité du verrou.

Dans une forme de réalisation, le verrou comporte au moins un ressort de traction, une première extrémité dudit ressort de traction étant fixée au corps à un point de fixation, et une deuxième extrémité dudit ressort de traction, opposée à la première extrémité, étant reliée au verrou à un point d'accroche déporté par rapport à l'axe de verrou.

Dans une forme de réalisation, le verrou comporte au moins un moyen de préhension permettant à un opérateur de mettre ledit verrou en rotation.

Dans une forme de réalisation, le système de verrouillage comporte par ailleurs au moins une butée destinée à bloquer la rotation du verrou dans un sens de verrouillage ou un sens de déverrouillage du dispositif.

Dans une forme de réalisation, le système de transmission comporte en outre :
- un bloc de commande hydraulique ;
- une tige de piston reliant l'actionneur manuel audit bloc de commande hydraulique et apte à être mis en mouvement par mouvement de l'actionneur manuel afin d'agir sur ledit bloc de commande hydraulique.

Dans une forme de réalisation, le corps comporte deux flasques latéraux rendus solidaires entre eux par un ensemble d'entretoises.

L'invention concerne également un ensemble selon la revendication 8.

### BREVE DESCRIPTION DES FIGURES

L'invention sera mieux comprise à la lecture de la description qui suit et à l'examen des figures qui l'accompagnent. Celles-ci ne sont présentées qu'à titre indicatif et nullement limitatif de l'invention.

Sur les figures, des éléments réalisant des fonctions identiques portent des numéros de référence identiques.
La figure 1, déjà citée, représente un dispositif de secours à commande manuelle de l'art antérieur.
La figure 2 représente une vue isométrique du dispositif selon l'invention dans un mode de réalisation particulier.
La figure 3 représente une vue en coupe du dispositif selon l'invention dans le mode de réalisation de la figure 2, en absence du bloc hydraulique.
La figure 4A représente une vue de côté du dispositif selon l'invention dans le mode de réalisation de la figure 2, en position verrouillée.
La figure 4B représente une vue de côté du dispositif selon l'invention dans le mode de réalisation de la figure 2 en position déverrouillée, et levier en position basse.
La figure 4C représente une vue de côté du dispositif selon l'invention dans le mode de réalisation de la figure 2, avec système de verrouillage en position déverrouillée, et levier en position haute.
La figure 5 représente une vue isométrique du verrou, du ressort de traction et de l'entretoise support dans le mode de réalisation de la figure 2, le verrou étant en position abaissée.

Les figures sont des schémas de principe proposés pour une bonne compréhension de l'invention et ne sont pas nécessairement à l'échelle.

### DESCRIPTION DETAILLEE

Dans l'exemple détaillé ci-après, l'invention concerne un dispositif 1 de secours à commande manuelle de largage d'une charge portée par levage aérien, par exemple par un crochet de charge d'un hélicoptère.

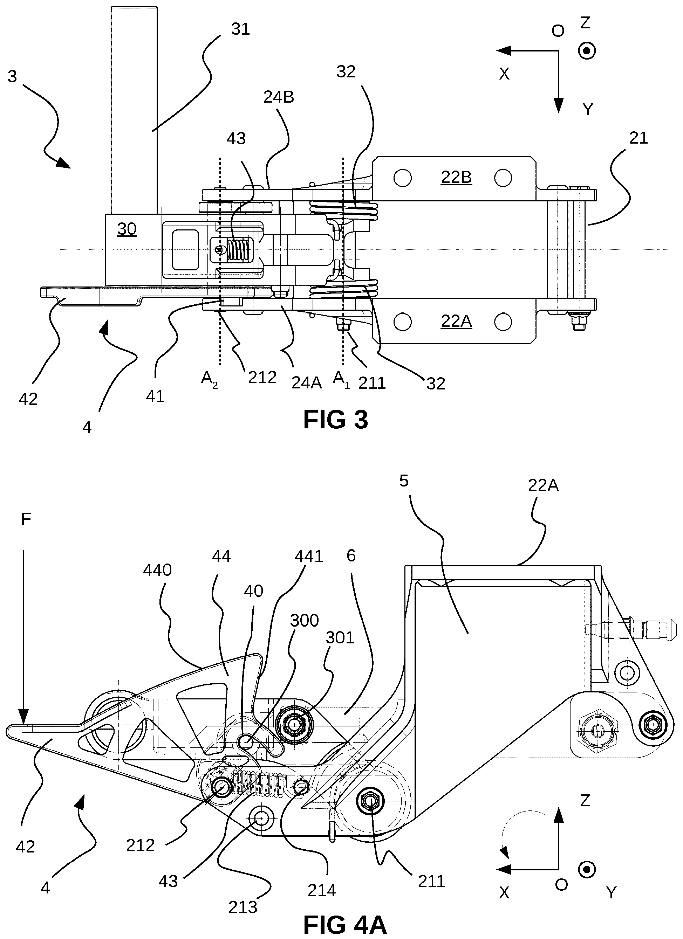

En référence aux figures 2 et 3, le dispositif 1 selon l'invention comporte :
- un corps 2 ;
- un actionneur manuel 3 ;
- un verrou 4 ;
- un bloc de commande hydraulique 5 ;
- un piston 6.

Dans un souci de simplification de la description, un repère orthonormé (O, X, Y, Z) est défini. Le plan (OXZ) est parallèle à un plan de symétrie moyen du corps 2. L'axe (OY) est perpendiculaire à ce plan.

En référence à ce repère orthonormé, un sens de rotation direct autour de l'axe (OY) est celui indiqué par la flèche à proximité du repère sur les figures 4A-4C. Un sens de rotation indirect est par définition un sens de rotation inverse au sens de rotation direct. Avec cette convention, une rotation de 90° de l'axe (OZ) dans le sens direct autour de l'axe (OY) transforme l'axe (OZ) en l'axe (OX).

Le corps 2 comprend deux flasques latéraux 20A, 20B disposés en vis-à-vis, de manière sensiblement parallèle entre eux, et rendus solidaires entre eux par une pluralité d'entretoises 21.

Chacun des flasques latéraux 20A, 20B est prolongé en une extrémité supérieure par un plateau 22A, 22B sensiblement perpendiculaire à un plan moyen dudit flasque. Le plateau 22A, 22B présente un ensemble de trous aptes à recevoir des fixations, permettant de fixer le dispositif 1 à une structure d'un aéronef. Au moins une nervure 23 est disposée sur une face externe de chaque flasque latéral afin d'apporter une rigidité audit flasque et au plateau 22A, 22B associé.

L'actionneur manuel 3 comporte un levier 30 et une poignée 31 fixée audit levier.

Le levier 30 est traversé à une première extrémité par une première entretoise 211 orientée parallèlement à l'axe (OY) selon un premier axe de levier A1 et disposée entre les flasques latéraux 20A, 20B du corps 2 au niveau de bras 24A, 24B desdits flasques. Le levier 30 peut être mis en rotation autour de ladite première entretoise. Deux ressorts hélicoïdaux 32 sont disposés autour de la première entretoise 211, de part et d'autre de la première extrémité du levier 30, comme illustré sur la figure 3. Ces ressorts 32 sont reliés par une extrémité aux bras 24A, 24B des flasques latéraux 20A, 20B et par une autre extrémité à la première extrémité du levier 30, de sorte que ces ressorts s'opposent à la rotation du levier 30 lorsque le dispositif 1 est mis en œuvre.

Une protubérance située sur un flanc du levier 30 situé à proximité du verrou 4 s'étend perpendiculairement audit flanc pour former une gâche 300.

La poignée 31 est fixée à une seconde extrémité du levier 30, opposée à la première extrémité dudit levier. La poignée 31 est rendue solidaire du levier 30 par tout moyen de fixation adapté, par exemple par engagement et serrage dans un alésage de ladite poignée.

Le verrou 4 est formé dans une pièce sensiblement plane, montée en rotation par rapport aux flasques 20A, 20B autour d'une deuxième entretoise 212 orientée parallèlement à l'axe (OY) selon un axe de verrou A2, à une première extrémité dudit verrou disposée entre lesdits flasques du corps 2, de sorte que le verrou 4 peut être mis en rotation autour de l'axe de verrou A2 de ladite deuxième entretoise.

Le verrou 4 présente à proximité de sa première extrémité un cran 40 disposé dans le plan dudit verrou. Le cran 40 est formé d'une gorge en arc de cercle centré sur l'axe de verrou A2. Le cran 40 est apte à coopérer avec la gâche 300 du levier 30, la gâche 300 étant susceptible de glisser dans le cran 40 lorsque le verrou 4 est en rotation, et étant apte à bloquer la rotation dudit verrou lorsque ladite gâche est engagée dans le cran 40.

Une butée 41 en relief, s'étendant perpendiculairement à un plan moyen du verrou 4 et dans le même sens que la gâche 300 par rapport au plan moyen du levier 30, limite la rotation du verrou, dans un sens indirect, autour de l'axe (OY), par appui sur le bras 24A du flasque 20A correspondant. Le blocage en rotation du verrou 4 dans un sens indirect autour de l'axe (OY) est donc assuré par la gâche 300 et la butée 41. La présence de la butée 41 permet de diminuer les efforts subis par la gâche 300 lors du blocage, en permettant une répartition des efforts entre ces deux éléments, évitant ainsi une détérioration de la gâche 300 pouvant entraîner des problèmes de sécurité.

La première extrémité du verrou 4 définit un premier moyen de préhension 44, de forme globalement triangulaire, permettant à un opérateur de mettre en rotation le verrou 4 autour de l'axe de verrou A2, selon qu'il appuie sur une surface supérieure 440 du moyen de préhension 44 pour engager le cran 40 sur la gâche 300, ou qu'il appuie sur une surface latérale 441 pour dégager la gâche 300 du cran 40.

Le verrou 4 présente à une seconde extrémité un second moyen de préhension sous la forme d'un levier de verrou 42, sur lequel un opérateur peut également agir pour mettre en rotation ledit verrou autour de l'axe de verrou A2 par l'exercice d'une pression sur ledit levier de verrou.

La forme du verrou 4 est ainsi ergonomique, puisqu'elle permet à un opérateur de manœuvrer le verrou 4 soit de la main gauche, soit de la main droite selon le moyen de préhension saisi par l'opérateur.

Préférentiellement, le verrou 4 comporte des zones évidées afin de limiter sa masse.

Lorsque la gâche 300 est engagée dans le cran 40, la rotation du levier 30 est bloquée ; l'actionneur manuel 3 est verrouillé.

Lorsque le cran 40 bascule et libère la gâche 300 suite à une action de l'opérateur sur le verrou 4, la rotation du levier 30 est possible ; l'actionneur manuel 3 est alors déverrouillé.

Le bloc de commande hydraulique 5 est disposé entre les flasques 20A, 20B du corps 2. Le bloc de commande hydraulique 5 contrôle une ouverture du système de levage aérien pour le largage de la charge portée par ledit système de levage. Le bloc de commande hydraulique 5 comporte notamment un réservoir d'un fluide, par exemple de l'huile, relié à un maître cylindre (non représenté).

Une tige de piston 6 couple le bloc de commande hydraulique 5 au levier 30. La tige de piston 6 est reliée à une première extrémité à une entretoise piston 301 s'étendant entre les flancs dudit levier, de manière perpendiculaire auxdits flancs. La tige de piston 6 est reliée à une seconde extrémité au maître cylindre du bloc de commande hydraulique 5.

L'organisation relative des différents éléments et leurs fonctions sont précisées dans le contexte de la mise en œuvre du dispositif décrite ci-après.

En référence aux figures 4A-4C illustrant cette mise en œuvre, il est rappelé que le sens de rotation direct autour de l'axe (OY) est celui indiqué par la flèche à proximité du repère. Le sens indirect correspond donc au sens de rotation inverse.

En référence à la figure 4A, le dispositif est en position verrouillée. Dans cette position, la gâche 300 est engagée dans le cran 40 du verrou 4 dont la position est limitée par la butée 41 en appui sur le bras 24A. Dans cette position verrouillée, le verrou 4 est bloqué en rotation et le levier de verrou 42 est dans une position relevée compte-tenu de la forme du verrou 4.

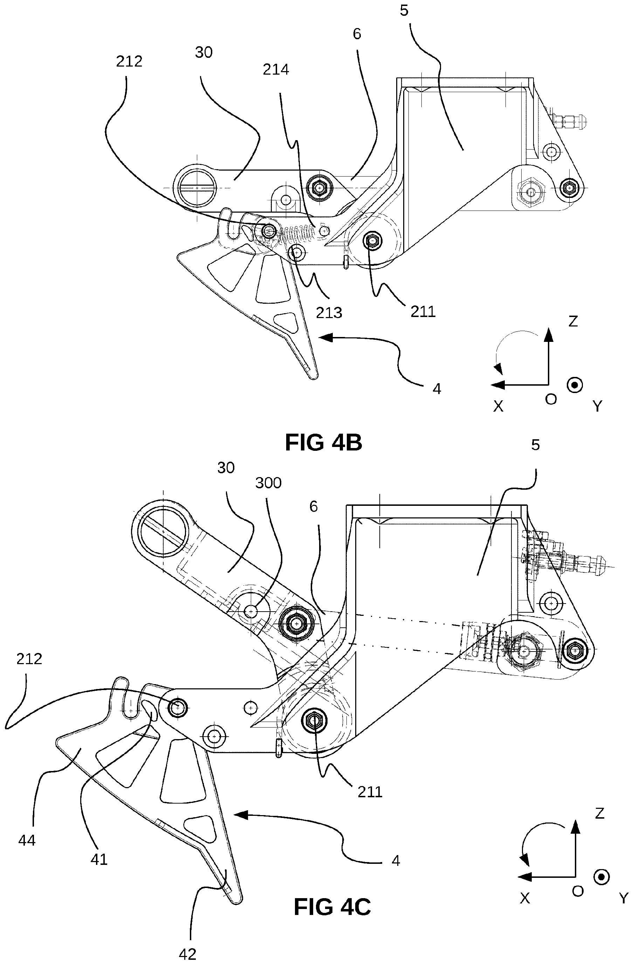

En référence aux figures 4A et 4B, un opérateur déverrouille le système en dégageant le cran 40 par application d'un effort F par exemple sur le levier verrou 42 afin de faire pivoter le verrou 4 dans le sens direct autour de l'axe de verrou A2. En référence aux figures, l'effort F est dirigé vers le bas, c'est-à-dire dans le sens des cotes Z décroissantes, et le déverrouillage du levier 3 est obtenu lorsque la gâche 300 est totalement dégagée du cran 40.

Le pivotement du verrou 4 est possible jusqu'à ce que ledit verrou entre en contact avec une entretoise d'arrêt 213 formant butée du corps 2. Le verrou 4 est alors en position abaissée.

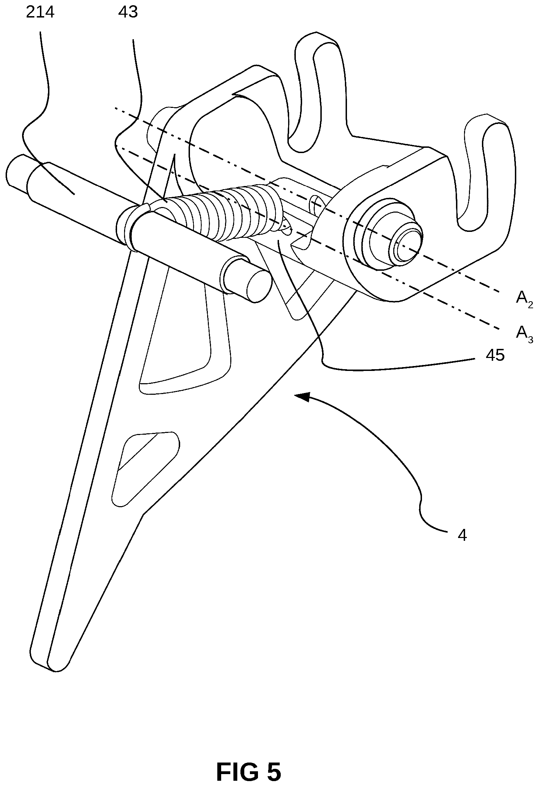

Un ressort de traction 43 relie le verrou 4 à une entretoise support 214 du corps 2. Une première extrémité du ressort de traction 43 est fixée à l'entretoise 214, et une deuxième extrémité du ressort est fixée au verrou 4. En référence à la figure 5, le verrou 4 comporte une partie transversale 45 comportant un trou dans lequel la deuxième extrémité du ressort de traction 43 est insérée. La partie transversale s'étend selon un axe moyen A3 déporté par rapport à l'axe de verrou A2

En référence à la figure 4A, lorsque le verrou 4 est en position relevée, le point d'accroche du ressort de traction 43 opposé à l'entretoise support 214 est au-dessus de l'axe de verrou A2, occasionnant une force de rappel s'opposant à un déverrouillage. Un effort suffisant est donc nécessaire de la part d'un opérateur pour contrebalancer cette force de rappel lors du déverrouillage du dispositif.

En référence à la figure 4B, lorsque le verrou 4 est en position abaissée, le point d'accroche du ressort 43 est en-dessous de l'axe de verrou A2, s'opposant ainsi à une rotation du verrou 4 vers la position relevée, et favorisant ainsi le déverrouillage.

Un angle de débattement entre une position intermédiaire et soit la position abaissée soit la position relevée du verrou 4 doit être suffisant pour permettre au ressort de traction 43 de tirer le verrou 4 soit vers la position relevée soit vers la position abaissée. Dans l'exemple illustré, l'angle de rotation limite au-delà duquel le ressort de traction 43 devient favorable à un verrouillage ou un déverrouillage est environ égal à 30°.

En variante non illustrée, le dispositif comprend au moins deux ressorts de traction disposés en parallèles. Cet agencement permet d'adapter l'effort de verrouillage et de déverrouillage en fonction du besoin.

La figure 4B illustre le dispositif dans une position dans laquelle ledit dispositif est déverrouillé, et le levier 30 est en position basse correspondant à une position d'attente de déclenchement. Dans cette configuration du dispositif 1, le levier 30 est libéré et maintenu dans sa position initiale. Le système de levage porte toujours la charge.

En référence à la figure 4C, une fois le dispositif 1 déverrouillé, l'opérateur exerce sur la poignée 31 de l'actionneur manuel 3 un effort dirigé sensiblement selon les cotes Z croissantes, lequel actionneur manuel 3 est, après déverrouillage, apte à être mis en rotation.

La mise en rotation du levier 30 entraîne une mise en mouvement de la tige de piston 6, lequel permet l'introduction du fluide du bloc de commande hydraulique 5 dans le maître cylindre, entraînant par la suite le déverrouillage du crochet du système de levage relié au dispositif selon l'invention par l'intermédiaire du bloc de commande hydraulique 5 commandant son ouverture, et le largage de la charge.

Sur la figure 4C, le levier 30 est dit en « position haute » ou position de déclenchement.

Le dispositif 1 peut bien entendu être remis par la suite en position verrouillée, en abaissant le levier 30 en position basse grâce à la poignée 31, puis par rotation du verrou 4 dans le sens indirect autour de l'axe (OY) afin de verrouiller ledit dispositif.

Il convient de remarquer que, bien que l'actionneur manuel 3 décrit ici est apte à être mis en rotation, ledit actionneur manuel pourrait également être un actionneur linéaire apte à se déplacer en translation, sans limiter la portée de l'invention.

## Revendications

1. Dispositif (1) apte à être fixé à une structure d'un hélicoptère pour une commande manuelle d'urgence d'un crochet de largage d'une charge suspendue à une élingue, le dispositif étant configuré tel que lors de son utilisation avec ledit crochet, ledit crochet est distant du dispositif, ledit dispositif comportant :
- un corps (2) ;
- un actionneur manuel (3) ;
- un système de transmission d'un mouvement de l'actionneur manuel (3) configuré pour transmettre ledit mouvement vers le crochet de largage distant et ;
- un élément de sécurité limitant les possibilités pour un opérateur d'actionner ledit actionneur manuel ;
ledit dispositif étant tel que:
- l'actionneur manuel (3) comporte une gâche (300) ;
- l'élément de sécurité est un verrou (4) apte à être mis en rotation autour d'un axe de verrou (A2) dudit corps et comportant un cran (40) apte à coopérer avec la gâche (300).

2. Dispositif (1) selon la revendication 1 **caractérisé en ce que** l'actionneur manuel (3) comporte un levier (30) et une poignée (31) solidaires entre eux, la gâche (300) étant disposée sur le levier (30) à proximité du verrou (4).

3. Dispositif (1) selon la revendication 1 ou la revendication 2 **caractérisé en ce que** le verrou (4) comporte au moins un ressort de traction (43), une première extrémité dudit ressort de traction étant fixée au corps (2) à un point de fixation, et une deuxième extrémité dudit ressort de traction, opposée à la première extrémité, étant reliée au verrou (4) à un point d'accroche déporté par rapport à l'axe de verrou (A2).

4. Dispositif (1) selon l'une quelconque des revendications précédentes **caractérisé en ce que** le verrou (4) comporte au moins un moyen de préhension (42, 44) permettant à un opérateur de mettre ledit verrou en rotation.

5. Dispositif (1) selon l'une quelconque des revendications précédentes, **caractérisé en ce qu'**il comporte par ailleurs au moins une butée (41, 213) destinée à bloquer la rotation du verrou (4) dans un sens de verrouillage ou dans un sens de déverrouillage dudit dispositif.

6. Dispositif (1) selon l'une quelconque des revendications précédentes **caractérisé en ce que** le système de transmission comporte :
- un bloc de commande hydraulique (5) ;
- une tige de piston (6) reliant l'actionneur manuel (3) audit bloc de commande hydraulique et apte à être mis en mouvement par mouvement de l'actionneur manuel (3) afin d'agir sur ledit bloc de commande hydraulique.

7. Dispositif (1) selon l'une quelconque des revendications précédentes **caractérisé en ce que** le corps (2) comporte deux flasques latéraux (20A, 20B) rendus solidaires entre eux par un ensemble d'entretoises (21).

8. Ensemble comportant un hélicoptère et un dispositif pour une commande manuelle d'urgence d'un crochet de largage distant d'une charge suspendue à une élingue selon l'une quelconque des revendications précédentes, ledit dispositif étant fixé à une structure de l'hélicoptère.

## Patentansprüche

1. Vorrichtung (1), die imstande ist, an einer Struktur eines Hubschraubers für eine manuelle Notsteuerung eines Abwurfhakens einer an einem Gehänge angehängten Last befestigt zu werden, wobei die Vorrichtung derart konfiguriert ist, dass der Haken bei deren Verwendung mit dem Haken von der Vorrichtung entfernt gelegen ist, wobei die Vorrichtung Folgendes beinhaltet:
- ein Gehäuse (2);
- ein manuelles Stellglied (3);
- ein System zum Übertragen einer Bewegung des manuellen Stellglieds (3), das konfiguriert ist, um die Bewegung zum entfernt gelegenen Abwurfhaken zu übertragen; und
- ein Sicherheitselement, welches die Möglichkeiten für einen Bediener, das manuelle Stellglied zu betätigen, begrenzt;
wobei die Vorrichtung derart ist, dass:
- das manuelle Stellglied (3) eine Schließklappe (300) beinhaltet;
- das Sicherheitselement ein Riegel (4) ist, der imstande ist, um eine Riegelachse (A2) des Gehäuses in Drehung versetzt zu werden, und eine Raste (40) beinhaltet, die imstande ist, mit der Schließklappe (300) zusammenzuwirken.

2. Vorrichtung (1) nach Anspruch 1, **dadurch gekennzeichnet, dass** das manuelle Stellglied (3) einen Hebel (30) und einen Griff (31) beinhaltet, die fest miteinander verbunden sind, wobei die Schließklappe (300) in der Nähe des Riegels (4) an dem Hebel (30) angeordnet ist.

3. Vorrichtung (1) nach Anspruch 1 oder Anspruch 2, **dadurch gekennzeichnet, dass** der Riegel (4) mindestens eine Zugfeder (43) beinhaltet, wobei ein erstes Ende der Zugfeder an einem Befestigungspunkt an dem Gehäuse (2) befestigt ist, und ein zweites Ende der Zugfeder, gegenüber dem ersten Ende, an einem Einhängepunkt mit dem Riegel (4) verbunden ist, der in Bezug auf die Riegelachse (A2) versetzt ist.

4. Vorrichtung (1) nach einem der vorstehenden Ansprüche, **dadurch gekennzeichnet, dass** der Riegel (4) mindestens ein Greifmittel (42, 44) beinhaltet, welches einem Bediener ermöglicht, den Riegel in Drehung zu versetzen.

5. Vorrichtung (1) nach einem der vorstehenden Ansprüche, **dadurch gekennzeichnet, dass** sie darüber hinaus mindestens einen Anschlag (41, 213) beinhaltet, der dazu bestimmt ist, die Drehung des Riegels (4) in eine Verriegelungsrichtung oder in eine Entriegelungsrichtung der Vorrichtung zu sperren.

6. Vorrichtung (1) nach einem der vorstehenden Ansprüche, **dadurch gekennzeichnet, dass** das System zum Übertragen Folgendes beinhaltet:
- einen Hydrauliksteuerungsblock (5);
- eine Kolbenstange (6), die das manuelle Stellglied (3) mit dem Hydrauliksteuerungsblock verbindet, und imstande ist, durch ein Bewegen des manuellen Stellglieds (3) in Bewegung versetzt zu werden, um auf den Hydrauliksteuerungsblock einzuwirken.

7. Vorrichtung (1) nach einem der vorstehenden Ansprüche, **dadurch gekennzeichnet, dass** das Gehäuse (2) zwei seitliche Flansche (20A, 20B) beinhaltet, die durch eine Einheit von Abstandhaltern (21) fest miteinander in Verbindung gebracht werden.

8. Einheit, die einen Hubschrauber und eine Vorrichtung für eine manuelle Notsteuerung eines entfernt gelegenen Abwurfhakens einer an einem Gehänge angehängten Last nach einem der vorstehenden Ansprüche beinhaltet, wobei die Vorrichtung an einer Struktur des Hubschraubers befestigt ist.

## Claims

1. A device (1) adapted to be fastened to a structure of a helicopter for an emergency manual control of a hook for dropping a load hanging to a sling, the device being configured such that during the use thereof with said hook, said hook is remote from the device, said device including:
- a body (2);
- a manual actuator (3);
- a system for transmitting a movement of the manual actuator (3) configured to transmit said movement towards the remote drop hook and;
- a safety element limiting the possibilities for an operator to actuate said manual actuator;
said device being such that:
- the manual actuator (3) includes a pawl (300);
- the safety element is a lock (4) adapted to be rotated about a lock axis (A2) of said body and including a ratchet (40) adapted to cooperate with the pawl (300).

2. The device (1) according to claim 1, **characterised in that** the manual actuator (3) includes a lever (30) and a handle (31) secured together, the pawl (300) being disposed on the lever (30) in proximity to the lock (4).

3. The device (1) according to claim 1 or claim 2, **characterised in that** the lock (4) includes at least one tension spring (43), a first end of said tension spring being fastened to the body (2) at a fastening point, and a second end of said tension spring, opposite to the first end, being connected to the lock (4) at a hooking point offset with respect to the lock axis (A2).

4. The device (1) according to any one of the preceding claims, **characterised in that** the lock (4) includes at least one gripping means (42, 44) enabling an operator to rotate said lock.

5. The device (1) according to any one of the preceding claims, **characterised in that** it further includes at least one stop (41, 213) intended to block the rotation of the lock (4) in a locking direction or in an unlocking direction of said device.

6. The device (1) according to any one of the preceding claims, **characterised in that** the transmission system includes:
- a hydraulic control block (5);
- a piston rod (6) connecting the manual actuator (3) to said hydraulic control block and adapted to be actuated by the movement of the manual actuator (3) in order to act on said hydraulic control block.

7. The device (1) according to any one of the preceding claims, **characterised in that** the body (2) includes two lateral flanges (20A, 20B) secured together by a set of spacers (21).

8. A set including a helicopter and a device for an emergency manual control of a hook for remote dropping of a load hanging to a sling according to any one of the preceding claims, said device being fastened to a structure of the helicopter.
